# EUROPÄISCHE PATENTSCHRIFT

(11) **EP 0 962 654 B1**
(45) Veröffentlichungstag und Bekanntmachung des Hinweises auf die Patenterteilung: **10.09.2003**
(21) Anmeldenummer: 99108010.2
(22) Anmeldetag: 22.04.1999
(51) Int. Cl.: F04B 23/02, F04B 53/08, F04B 17/03

(54) **Hydraulisches Motor-Pumpenaggregat**
Hydraulic motor-pump unit
Unité moteur et pompe hydraulique

(30) Priorität: 03.06.1998 DE 29809935 U
(43) Veröffentlichungstag der Anmeldung: 08.12.1999
(73) Patentinhaber: HAWE Hydraulik GmbH & Co. KG, 81673 München (DE)
(72) Erfinder: Neumair, Georg Dipl.-Ing., 85402 Thalhausen (DE)
(74) Vertreter: Grünecker, Kinkeldey, Stockmair & Schwanhäusser Anwaltssozietät

(56) Entgegenhaltungen:
- EP-A- 0 444 220
- WO-A-94/18459
- WO-A-97/23733
- CH-A- 596 697
- DE-C- 4 323 574
- DE-U- 8 207 794
- DE-U- 29 519 941
- PATENT ABSTRACTS OF JAPAN vol. 009, no. 297 (M-432), 25. November 1985 & JP 60 135679 A (NIPPON DENSO KK), 19. Juli 1985
- PATENT ABSTRACTS OF JAPAN vol. 098, no. 004, 31. März 1998 & JP 09 329102 A (NISSAN DIESEL MOTOR CO LTD), 22. Dezember 1997

## Beschreibung

Die Erfindung betrifft ein hydraulisches Motor-Pumpenaggregat der im Oberbegriff des Anspruchs 1 angegebenen Art.

Ein aus DE-U-82 07 704 bekanntes Motor-Pumpenaggregat enthält einen Rohrschlangen-Wärmetauscher als Teil des Ölreservoirs.

Bei einem aus CH-A-596 697 bekannten Pumpenaggregat ist im Ölreservoir ein zum Boden des Ölreservoirs gerichtetes Rücklaufrohr vorgesehen.

Weiterer Stand der Technik ist enthalten in WO 94/18459 und JP 09 32 9102-A sowie JP 60 13 5679-A.

Zwangsgekühlte Motor-Pumpenaggregate ohne eigenen Kühler sind bekannt aus EP-A-0 198 250, EP-A-0 284 746, EP-A-0 444 220, DE-C-4 323 574 und DE-U-295 19 941. Solche Aggregate versorgen z.B. in Werkzeugmaschinen hydraulische Komponenten, insbesondere hydraulische Spannvorrichtungen, wobei das Aggregat Druckquelle und Druckmittelreservoir in einem ist.

Bei einigen Werkzeugmaschinen, z.B. Drehmaschinen oder Drehautomaten, läßt sich in der hydraulischen Spannvorrichtung Leckage nicht vermeiden, insbesondere wenn drehbare und verschiebbare Komponenten in der Spannvorrichtung vorgesehen sind. Leckageöl fällt mit relativ hoher Temperatur, z.B. 80° oder mehr, und wegen der Bewegung im Austrittsbereich mit Luft versetzt oder schaumig an. Die Leckage nimmt mit dem Arbeitsdruck zu. Es ist aus WO97/23733 bekannt, Leckageöl über einen außerhalb des Reservoirs vorgesehenen Kühler in das Aggregat zu leiten.

Solche Aggregate müssen oftmals im Dauerbetrieb laufen (deshalb eine Zwangskühlung), wobei das Druckmittel allenfalls eine durchschnittliche Betriebstemperatur von 50°C erreichen und halten soll, weil höhere Temperaturen u.a. für das Druckmittel schädlich sind. Das Druckmittel nimmt Wärme im Pumpenelement und vor allem in der Spannvorrichtung auf, und auch vom zumeist im Gehäuse in der Druckmittelfüllung angeordneten Antriebsmotor. Die schaumige Konsistenz des Leckageöls und der hohe Wärmegehalt sind dabei unerwünscht. Die Betriebstemperatur kann zu hoch werden. Als gravierender Nebeneffekt kann ein Stau des Leckageöls, bei dem der Schaum zur Spannvorrichtung hochsteigt, bis Druckmittel bzw. Schaum an der Spannvorrichtung austritt.

Der Erfindung liegt die Aufgabe zugrunde, ein Aggregat der eingangs genannten Art zu schaffen, das trotz Rückführung heißen und/oder schaumigen Leckageöls in das Aggregat eine niedrige Betriebstemperatur des Druckmittels und eine wirksame Entschäumung ermöglicht.

Die gestellte Aufgabe wird erfindungsgemäß mit den Merkmalen des Anspruchs 1 gelöst.

In den baulich von der Druckmittelfüllung im Aggregat getrennten Zwischenspeicher läuft Leckageöl im wesentlichen gegendruckfrei ein. Dadurch wird vermieden, daß der Schaum bis zum Entstehungsort der Leckage hochsteigt. Das Leckageöl hat im Zwischenspeicher nicht nur ausreichend Zeit, Luft freizugeben und zu entschäumen, sondern wird intensiv lokal gekühlt, ohne die enthaltene Wärme direkt in der Druckmittelfüllung im Gehäuse zu verteilen. Dadurch läßt sich auch bei Dauerbetrieb eine niedrige Betriebstemperatur des Druckmittels halten, denn sich im Zwischenspeicher sammelndes Leckageöl wird getrennt von der Druckmittelfüllung eigengekühlt und beruhigt. Der Zwischenspeicher befindet sich zweckmäßigerweise innen im Gehäuse, so daß bewährte Gehäusekonzepte unverändert beibehalten werden können.

Um gesammelte Leckage im Zwischenspeicher besonders wirksam kühlen zu können, sollte der Zwischenspeicher an der Innenseite der Gehäusewand und in der Nähe der Zwangskühlung angeordnet sein.

Zweckmäßig befindet sich der Zwischenspeicher angrenzend an den Deckel und in einem Bereich, in dem das Kühlgebläse für eine starke Wärmeabfuhr zu sorgen vermag.

In einem Ringraum des Zwischenspeichers wird eine optimal große Fläche der Gehäusewand zur Kühlung genutzt und läßt sich eine relativ große Leckagemenge zwischenspeichern. Erst nachdem die gesammelte Leckage ausreichend gekühlt und beruhigt ist, gelangt sie nach und nach in die Druckmittelfüllung. Das zumeist im Bodenbereich des Gehäuses angeordnete Pumpenelement wird mit im wesentlichen gleichmäßig temperiertem und luftfreiem Druckmittel versorgt.

Zweckmäßig wird eine möglichst große Fläche der Gehäuseinnenwand zur Wärmeabfuhr aus dem Leckageöl benutzt.

Günstig ist die Strömungsverbindung zum Inneren des Gehäuses nur eine Überlaufschwelle, über die gekühltes Leckageöl in die Druckmittelfüllung fließt.

Baulich einfach ist es der Ringraum oben offen, um einen Rückstau zu vermeiden.

Der Zwischenspeicher wird baulich einfach und montagetechnisch günstig mittels eines Rohrabschnittes definiert, der an der Gehäuseinnenwand befestigt ist. Dadurch entfallen kostenintensive Modifikationen bewährter Aggregatekonzepte.

Es kann ein einfach geformter Rohrabschnitt zum Begrenzen des Zwischenspeichers benutzt werden.

Durch die Entschäumungsstruktur des Zwischenspeichers wird der Luftaustritt aus dem gesammelten Leckageöl unterstützt.

Mit einer oberflächenvergrößerenden Strukturierung wird der Wärmeübergang in die Gehäuseinnenwand verbessert.

Um einen Rückstau zu vermeiden, mündet der Leckage-Rückführanschluß direkt in den Zwischenspeicher.

Zweckmäßig läßt sich ein großquerschnittiger und zweckmäßigerweise transparenter Rückführschlauch einfach und dicht anschließen.

Durch eine Verrippung der Gehäuseaußenwand wird die Wärmeableitung ebenfalls verstärkt.

Zweckmäßig befindet sich der Zwischenspeicher oberhalb des Antriebsmotors, d.h. in einem Bereich der Druckmittelfüllung, in der relativ kühles Druckmittel vorliegt und der Abstand zum Ausgang der Pumpenelemente groß ist.

Mit speziellen Dimensionen beansprucht der Zwischenspeicher nur einen geringen Teil des Nutzvolumens des Gehäuses.

Das Aggregat ist besonders zweckmäßig zur Verwendung bei einer Werkzeugmaschine, die starke, heiße Leckage, z.B: an der Spannvorrichtung, hat, wobei das Aggregat mit optimaler Betriebstemperatur des Druckmittels auch im Dauerbetrieb arbeiten kann.

Im Kern besteht die Erfindung darin, die zum Aufrechterhalten einer ausreichenden Druckmittelversorgung eines Verbrauchers in geschlossenem Kreislauf in das Aggregat rückzuführende Leckage nicht wie das Rücklauföl unmittelbar einzuleiten, sondern ohne nennenswerten Staudruck zuerst in einen Zwischenspeicher zu bringen, in dem sich die Leckage beruhigen kann und getrennt intensiver gekühlt wird als bei direkter Mischung mit der Druckmittelfüllung im Gehäuse.

Anhand der Zeichnung werden Ausführungsformen des Erfindungsgegenstandes erläutert. Es zeigen:
- Fig. 1: einen Vertikalschnitt eines hydraulischen Motor-Pumpenaggregats, und
- Fig. 2: ein Blockschaltbild einer hydraulischen Spannvorrichtung einer Werkzeugmaschine, deren hydraulische Druckversorgung durch das Motor-Pumpenaggregat gebildet wird.

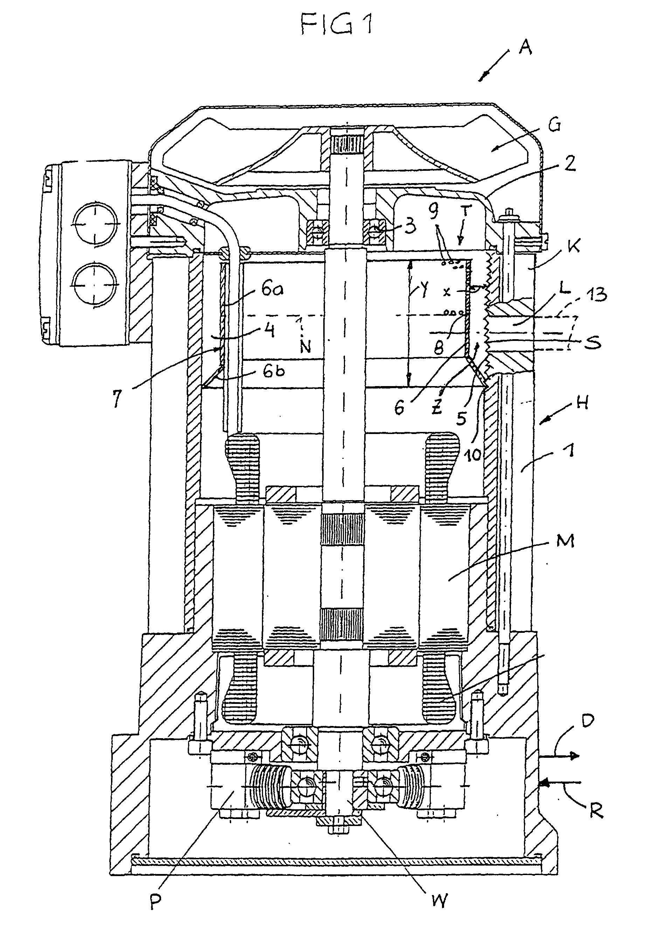

In Fig. 1 weist ein Motor-Pumpenaggregat A ein Gehäuse H mit einer Gehäusewand 1 (z.B. einem Leichtmetall-Rohrabschnitt) und einem oberseitigen Deckel 2 auf, das ein Druckmittelreservoir bildet und einen Antriebsmotor M sowie wenigstens ein von diesem getriebenes, hydraulisches Pumpenelement P innerhalb der Druckmittelfüllung enthält. Das Betriebsniveau der Druckmittelfüllung kann etwa bei N liegen. Das Gehäuse H wird stehend angeordnet. Auf dem Deckel 2 ist ein Kühlgebläse G angeordnet, das von der in einem Lager 3 im Deckel 2 gelagerten Motorwelle W getrieben wird und Kühlluft entlang der mit Kühlrippen K ausgebildeten Gehäuseaußenwand nach unten bläst. Im unteren Bereich des Gehäuses H sind ein Druckanschluß D sowie ein Rücklaufanschluß R vorgesehen. Ferner ist in der Gehäusewand 1 und in der Nähe des Deckels 2 bzw. oberhalb des Antriebsmotors M ein als Gewindebohrung ausgebildeter Leckage-Rückführanschluß L geformt, der in einen z.B. im Gehäuse H innen angeordneten Zwischenspeicher Z für Leckage mündet. Es ist ein Kolbenpumpenelement P gezeigt. Jedoch können andere übliche Pumpen vorgesehen sein, z.B. Zahnradpumpen oder dgl. Der Antriebsmotor M könnte nur teilweise in das Gehäuse greifen oder außen auf dem Gehäuse angeordnet sein. Das Kühlgebläse G könnte einen eigenen Antrieb aufweisen.

Der Zwischenspeicher Z ist ein an der Gehäuseinnenwand 5 umlaufend angeordneter Ringraum 4 mit relativ schmalem Querschnitt, d.h. kleinerer Weite x gegenüber der größeren Höhe y. Eine innenseitige Begrenzung 6 des Ringraumes 4 wird durch einen Rohrabschnitt 7 gebildet, z.B. aus Stahl oder Leichtmetall oder Kunststoff, der einen zylindrischen Abschnitt 6a und einen unterseitigen kegelig oder gerundet aufgeweiteten Abschnitt 6b besitzt und mit seinem unteren Rand in einer umlaufenden Nut 10 der Innenwand 5 sitzt. Der Ringraum 4 ist nach oben offen und besitzt eine Überlaufschwelle 8 in etwa auf der Höhe des höchsten Punktes des Leckage-Rückführanschlusses S. Die Innenwand 5 kann mit einer oberflächenvergrößernden Strukturierung S versehen sein, beispielsweise mit einem groben Gewinde. Nach oben anschließend an die Überlaufschwelle 8 kann eine Entschäumungsstruktur T in der Begrenzung 6 vorgesehen sein, beispielsweise in Form einer Perforierung aus vielen kleinen Bohrungen 9. Zweckmäßigerweise liegt die Überlaufschwelle 8 höher als das normale Betriebsniveau N im Inneren des Gehäuses H.

An den Leckage-Rückführanschluß L ist eine Leitung 13, z.B. ein transparenter Schlauch, angeschlossen, durch welche anfallendes Leckageöl in den Zwischenspeicher Z eingeleitet wird. Die Leckage sammelt sich im Zwischenspeicher Z und steigt bis zur Überlaufschwelle 8 hoch. Enthaltene Luftblasen können nach oben austreten, so daß die gegebenenfalls schaumige Leckage entschäumt wird. Die Entschäumungsstruktur T kann die Entschäumungswirkung verbessern. Da sich der Zwischenspeicher Z in der Nähe des Kühlgebläses G befindet, wird die im Zwischenspeicher Z gesammelte Leckage intensiv gekühlt, bis sie schließlich der Druckmittelfüllung im Gehäuseinneren zugemischt wird.

Der Zwischenspeicher Z könnte auch an der Außenseite des Gehäuses H angeordnet sein.

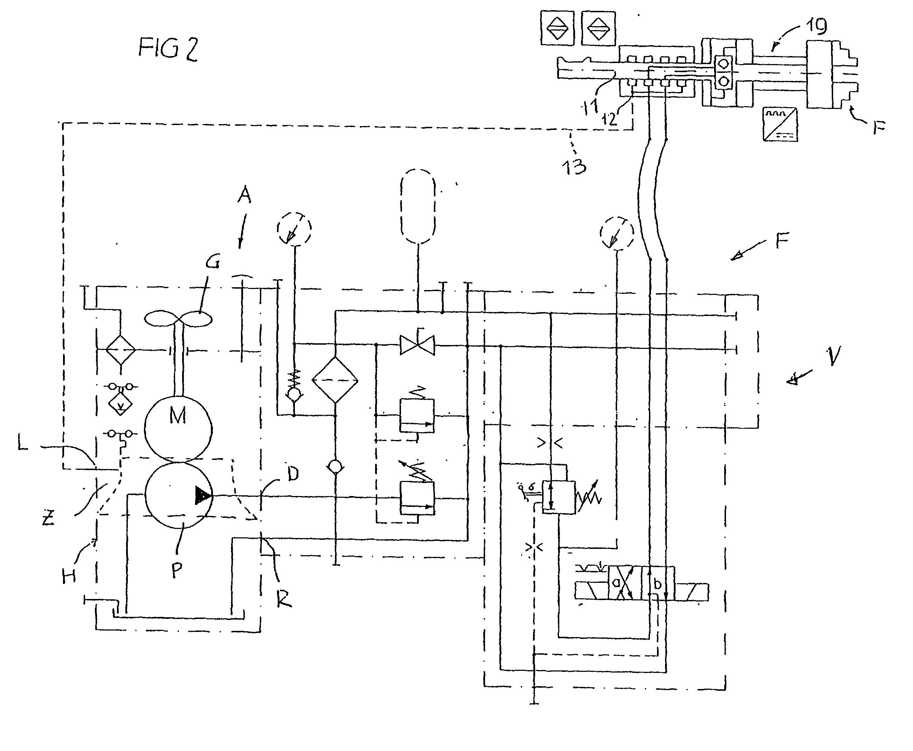

Für eine in Fig. 2 als Blockschaltbild gezeigten Steuervorrichtung V einer hydraulischen Spannvorrichtung 19 einer Werkzeugmaschine, beispielsweise einem Spannfutter F einer Drehmaschine oder eines Drehautomaten, dient das Motorpumpenaggregat beispielsweise von Fig. 1 als Druckversorgungsquelle und Druckmittelreservoir. Die Spannvorrichtung 19, besitzt dehbare und verschiebbare Komponenten 11, an denen der Arbeitsdruck des Druckmittels ansteht, so daß Leckageöl austritt, das heiß (bis 80°C oder mehr) und schaumig sein kann. Die auftretende Leckage wird an einem Leckageaustritt 12 gesammelt und über die Leitung 13 dem Leckage-Rückführanschluß L des Aggregats A zugeführt, zweckmäßigerweise durch Schwerkraft. Die Leckage wird im Aggregat A zunächst nur in den Zwischenspeicher Z geleitet, gesammelt und beruhigt bzw. entschäumt und dabei intensiv durch das Kühlgebläse G gekühlt, ehe sie der Druckmittelfüllung im Gehäuse H zugemischt wird. Da der hohe Wärmeinhalt der Leckage im Zwischenspeicher Z wirkungsvoll abgebaut wird, läßt sich eine Betriebstemperatur des Druckmittels im Aggregat A von beispielsweise rund 50°C problemlos auch bei Dauerbetrieb einhalten.

## Patentansprüche

1. Hydraulisches Motor-Pumpenaggregat (A),, mit einem ein Reservoir für eine Druckmittelfüllung definierenden, mit Luft zwangsgekühlten Gehäuse (H), in dem wenigstens ein von einem Antriebsmotor (M) getriebenes Pumpenelement (P) enthalten ist, mit wenigstens einem Druckanschluß (D) und einem Rücklaufanschluß (R), und mit wenigstens einem getrennten Leckage-Rückführanschluß (L) im Gehäuse (H), **dadurch gekennzeichnet, daß** das Gehäuse (H) bei der Gehäusewand wenigstens einen zwecks Kühlung baulich von der Druckmittelfüllung getrennten, mit dem Leckage-Rückführanschluß (L) verbundenen Zwischenspeicher (Z) aufweist.

2. Aggregat nach Anspruch 1, **dadurch gekennzeichnet, daß** der Zwischenspeicher (Z) an der Innenseite (5) der Gehäusewand (1) in deren in der Nähe der Zwangskühlung (G) liegenden Bereich angeordnet ist.

3. Aggregat nach Anspruch 1, **dadurch gekennzeichnet, daß** das Gehäuse (H) einen oberseitigen Deckel (2) trägt, auf dem ein die Gehäuseaußenwand beaufschlagendes Kühlgebläse (G) als Zwangskühlung angeordnet ist, und daß der Zwischenspeicher (Z) angrenzend an den Deckel (2) angeordnet ist.

4. Aggregat nach Anspruch 1, **dadurch gekennzeichnet, daß** der Zwischenspeicher (Z) ein mit dem Innenraum des Gehäuses (H) strömungsverbundener Ringraum (4) ist.

5. Aggregat nach Anspruch 4, **dadurch gekennzeichnet, daß** die horizontale Weite (x) des Ringraums (4) kleiner ist als seine Höhe (y).

6. Aggregat nach Anspruch 4, **dadurch gekennzeichnet, daß** die Strömungsverbindung vom Ringraum (4) zum Inneren des Gehäuses als Überlaufschwelle (8) ausgebildet ist.

7. Aggregat nach Anspruch 4, **dadurch gekennzeichnet, daß** der Ringraum (4) oben offen ist.

8. Aggregat nach Anspruch 4, **dadurch gekennzeichnet, daß** die innenseitige Begrenzung (6) des Ringraums (4) ein Rohrabschnitt (7) ist, dessen unterer Rand an der Gehäuseinnenwand (5) befestigt ist.

9. Aggregat nach Anspruch 8, **dadurch gekennzeichnet, daß** der Rohrabschnitt (7) eine kegelige oder gerundete untere Aufweitung (6b) aufweist, deren Rand in einer Umfangsnut (10) der Gehäuseinnenwand (5) sitzt.

10. Aggregat nach Anspruch 4, **dadurch gekennzeichnet, daß** die innenseitige Begrenzung (6) des Ringraums (4) eine für das Druckmittel durchlässige Entschäumungsstruktur (T) aufweist, vorzugsweise eine bandartig umlaufende Perforation aus einzelnen Bohrungen (9).

11. Aggregat nach wenigstens einem der vorhergehenden Ansprüche, **dadurch gekennzeichnet, daß** die Gehäuseinnenwand (5), zumindest innerhalb des Ringraums (4), eine oberflächenvergrößernde Strukturierung (S) besitzt, vorzugsweise ein Gewinde.

12. Aggregat nach wenigstens einem der vorhergehenden Ansprüche, **dadurch gekennzeichnet, daß** der Leckage-Rückführanschluß (L) in der Gehäusewand (1) unterhalb der Überlaufschwelle (8) bzw. der Entschäumungsstruktur (T) in den Ringraum (4) mündet.

13. Aggregat nach Anspruch 1, **dadurch gekennzeichnet, daß** der Leckage-Rückführanschluß (L) eine Gewindebohrung als Schraubanschluß eines Schlauchnippels ist.

14. Aggregat nach wenigstens einem der vorhergehenden Ansprüche, **dadurch gekennzeichnet, daß** die Gehäuseaußenwand zumindest im Höhenbereich des Zwischenspeichers (Z) verrippt ist.

15. Aggregat nach Anspruch 1, **dadurch gekennzeichnet, daß** der Antriebsmotor (M) im Gehäuse (H) in der Druckmittelfüllung oberhalb des Pumpenelements (P) angeordnet ist, und daß der Zwischenspeicher (Z) oberhalb des Antriebsmotors (M) vorgesehen ist.

16. Aggregat nach wenigstens einem der vorhergehenden Ansprüche, **dadurch gekennzeichnet, daß** der Ringraum (4) eine Höhe (y) von ca. 75 mm und eine Weite (x) von ca. 11 mm aufweist, wobei die Überlaufschwelle (8) bzw. die Entschäumungsstruktur (T) ca. 40 bis 60 mm oberhalb des Bodens des Ringraums (4) liegt, vorzugsweise in etwa auf der Höhe des höchsten Punktes des Leckage-Rücklaufanschlusses (L).

17. Aggregat nach wenigstens einem der vorhergehenden Ansprüche, **dadurch gekennzeichnet, daß** der Leckage-Rückführanschluß (L) über eine Leitung (13) mit dem Leckageaustritt (12) einer hydraulischen Drehmaschinen-Spannvorrichtung (29) verbunden ist, vorzugsweise einer Spannvorrichtung (19) mit dreh- und verschiebbaren Komponenten (11).

## Claims

1. Hydraulic motor/pump assembly (A), with a casing (H) which defines a reservoir for a pressure-medium filling and is force-cooled by air and in which is contained at least a pump element (P) driven by a drive motor (M), with at least one pressure connection (D) and one return connection (R), and with at least one separate leakage recirculation connection (L) in the casing (H), **characterized in that** the casing (H) has, near the casing wall, at least one intermediate store (Z) separated structurally from the pressure-medium filling for cooling purposes and connected to the leakage recirculation connection (L).

2. Assembly according to Claim 1, **characterized in that** the intermediate store (Z) is arranged on the inside (5) of the casing wall (1) **in that** region of the latter which lies in the vicinity of the forced cooling (G).

3. Assembly according to Claim 1, **characterized in that** the casing (H) carries a top-side cover (2), on which a cooling blower (G) acting upon the casing outer wall is arranged as forced cooling, and **in that** the intermediate store (Z) is arranged adjacently to the cover (2).

4. Assembly according to Claim 1, **characterized in that** the intermediate store (Z) is an annular space (4) flow-connected to the inner space of the casing (H).

5. Assembly according to Claim 4, **characterized in that** the horizontal width (x) of the annular space (4) is smaller than its height (y).

6. Assembly according to Claim 4, **characterized in that** the flow connection from the annular space (4) to the interior of the casing is designed as an overflow threshold (8).

7. Assembly according to Claim 4, **characterized in that** the annular space (4) is open at the top.

8. Assembly according to Claim 4, **characterized in that** the inner delimitation (6) of the annular space (4) is a tubular portion (7), the lower edge of which is fastened to the casing inner wall (5).

9. Assembly according to Claim 8, **characterized in that** the tubular portion (7) has a conical or rounded lower widening (6b), the edge of which is seated in a circumferential groove (10) of the casing inner wall (5).

10. Assembly according to Claim 4, **characterized in that** the inner delimitation (6) of the annular space (4) has an anti-foaming structure (T) permeable to the pressure medium, preferably a perforation running around in a band-like manner and consisting of individual bores (9).

11. Assembly according to at least one of the preceding claims, **characterized in that** the casing inner wall (5) possesses, at least within the annular space (4), a surface-enlarging structuring (S), preferably a thread.

12. Assembly according to at least one of the preceding claims, **characterized in that** the leakage recirculation connection (L) in the casing wall (1) issues into the annular space (4) below the overflow threshold (8) or the anti-foaming structure (T).

13. Assembly according to Claim 1, **characterized in that** the leakage recirculation connection (L) is a threaded bore as a screw connection of a hose nipple.

14. Assembly according to at least one of the preceding claims, **characterized in that** the casing outer wall is ribbed at least in the region of height of the intermediate store (Z).

15. Assembly according to Claim 1, **characterized in that** the drive motor (M) is arranged in the casing (H) in the pressure-medium filling above the pump element (P), and **in that** the intermediate store (Z) is provided above the drive motor (M).

16. Assembly according to at least one of the preceding claims, **characterized in that** the annular space (4) has a height (y) of approximately 75 mm and a width (x) of approximately 11 mm, the overflow threshold (8) or the anti-foaming structure (T) lying approximately 40 to 60 mm above the bottom of the annular space (4), preferably approximately level with the highest point of the leakage recirculation connection (L).

17. Assembly according to at least one of the preceding claims, **characterized in that** the leakage recirculation connection (L) is connected via a line (13) to the leakage outlet (12) of a hydraulic lathe chucking device (29), preferably a chucking device (19) with rotatable and displaceable components (11).

## Revendications

1. Unité moteur et pompe hydraulique (A), comprenant un carter (H) à refroidissement forcé par air définissant un réservoir pour une charge d'agent sous pression et dans lequel est contenu au moins un élément de pompe (P) entraîné par un moteur de commande (M), comportant au moins un raccord de refoulement (D) et un raccord de retour (R), et au moins un raccord de recyclage de fuite (L) séparé dans le carter (H), **caractérisée en ce que** le carter (H) présente sur la paroi de carter au moins un réservoir intermédiaire (Z), séparé dans sa construction de la charge d'agent sous pression en vue du refroidissement et raccordé au raccord de recyclage de fuite (L).

2. Unité suivant la revendication 1, **caractérisée en ce que** le réservoir intermédiaire (Z) est disposé sur le côté intérieur (5) de la paroi de carter (1), dans la zone de cette dernière située au voisinage du refroidissement forcé (G).

3. Unité suivant la revendication 1, **caractérisée en ce que** le carter (H) supporte un couvercle (2) du côté supérieur, sur lequel est disposé en tant que refroidissement forcé un ventilateur de refroidissement (G) attaquant la paroi extérieure de carter, et que le réservoir intermédiaire (Z) est disposé à proximité du couvercle (2).

4. Unité suivant la revendication 1, **caractérisée en ce que** le réservoir intermédiaire (Z) est un espace annulaire (4) relié en écoulement à l'espace intérieur du carter (H).

5. Unité suivant la revendication 4, **caractérisée en ce que** la largeur horizontale (x) de l'espace annulaire (4) est inférieure à sa hauteur (y).

6. Unité suivant la revendication 4, **caractérisé**e en que la liaison d'écoulement entre l'espace annulaire (4) et l'intérieur du carter est réalisée sous forme de seuil de trop-plein (8).

7. Unité suivant la revendication 4, **caractérisée en ce que** l'espace annulaire (4) est ouvert en haut.

8. Unité suivant la revendication 4, **caractérisée en ce que** la délimitation du côté intérieur (6) de l'espace annulaire (4) est une section tubulaire (7) dont le bord inférieur est fixé sur la paroi intérieure de carter (5).

9. Unité suivant la revendication 8, **caractérisée en ce que** la section tubulaire (7) présente un élargissement inférieur (6b) en cône ou arrondi, dont le bord repose dans une rainure périphérique (10) de la paroi intérieure de carter (5).

10. Unité suivant la revendication 4, **caractérisée en ce que** la délimitation du côté intérieur (6) de l'espace annulaire (4) présente une structure antimousse (T) perméable à l'agent sous pression, de préférence une perforation périphérique en forme de bande formée de trous individuels (9).

11. Unité suivant l'une au moins des revendications précédentes, **caractérisée en ce que** la paroi intérieure de carter (5) présente, au moins à l'intérieur de l'espace annulaire (4), une structuration (S) augmentant la surface, de préférence un filetage.

12. Unité suivant l'une au moins des revendications précédentes, **caractérisée en ce que** le raccord de recyclage de fuite (L) débouche dans la paroi de carter (1) au-dessous du seuil de trop-plein (8) et/ou de la structure antimousse (T) dans l'espace annulaire (4).

13. Unité suivant la revendication 1, **caractérisée en ce que** le raccord de recyclage de fuite (L) est un taraudage sous forme de raccord fileté d'un embout de tuyau.

14. Unité suivant l'une au moins des revendications précédentes, **caractérisée en ce que** la paroi extérieure de carter est nervurée au moins dans la zone de la hauteur du réservoir intermédiaire (Z).

15. Unité suivant la revendication 1, **caractérisée en ce que** le moteur de commande (M) est disposé dans le carter (H) dans la charge d'agent sous pression au-dessus de l'élément de pompe (P), et que le réservoir intermédiaire (Z) est prévu au-dessus du moteur de commande (M).

16. Unité suivant l'une au moins des revendications précédentes, **caractérisée en ce que** l'espace annulaire (4) présente une hauteur (y) d'environ 75 mm et une largeur (x) d'environ 11 mm, le seuil de trop-plein (8) et/ou la structure antimousse (T) se situant à environ 40 à 60 mm au-dessus du fond de l'espace annulaire (4), de préférence à peu près au niveau du point culminant du raccord de recyclage de fuite (L).

17. Unité suivant l'une au moins des revendications précédentes, **caractérisée en ce que** le raccord de recyclage de fuite (L) est raccordé par l'intermédiaire d'une conduite (13) à la sortie de fuite (12) d'un dispositif de serrage hydraulique (19) de tour, de préférence un dispositif de serrage (19) ayant des composants rotatifs et coulissants (11).
